# EUROPEAN PATENT SPECIFICATION

(11) **EP 1 526 681 B1**
(45) Date of publication and mention of the grant of the patent: **15.07.2009**
(21) Application number: 03724793.9
(22) Date of filing: 28.04.2003
(51) Int. Cl.: H04L 12/28

(54) **A METHOD OF TRANSMITTING DATA OF DIFFERENT USERS IN THE VC -TRUNK OF MAN**
VERFAHREN ZUM ÜBERTRAGEN VON DATEN VERSCHIEDENER NUTZER IN EINEM VIRTUELLEN KANAL (VC-TRUNK) EINES MAN
PROCEDE DE TRANSMISSION DE DONNEES DE DIFFERENTS UTILISATEURS DANS LA VOIE VIRTUELLE VC POUR CONTENEUR D'IMAGES VC-TRUNK

(30) Priority: 27.09.2002 CN 02129236
(43) Date of publication of application: 27.04.2005
(73) Proprietor: Huawei Technologies Co., Ltd., Nanshan District, Shenzhen 518057 (CN)
(72) Inventor: LIU, Yao Huawei Adm.Bldg, Shenzhen Guangdong 518129 (CN); ZUO,M. Huawei Service Centre Building, Kefa Road, Shenzhen Guangdong 518057 (CN); YU, Zhou Huawei Service Centre Building, Kefa Road, Shenzhen Guangdong 518057 (CN); YANG, Wu Huawei Service Centre Building, Kefa Road, Shenzhen Guangdong 518057 (CN)
(74) Representative: Manitz, Finsterwald & Partner GbR
(86) International application number: PCT/CN2003/000312
(87) International publication number: WO 2004/030281

(56) References cited:
- WO-A-99/04595
- CN-A- 1 356 806
- KR-A- 2002 069 464
- US-A1- 2002 089 992

## Description

### Field of the Technology

The invention relates generally to Metropolitan Area Network (MAN) transmission field, specifically to a transmission method adapted to accommodate for different users data on same Virtual Container TRUNK (VC_TRUNK) of synchronous digital hierarchy (SDH) in a Metropolitan Area Network (MAN).

### Background of the Invention

Comparing with LAN and WAN, the MAN that implements user data transmission in the metropolitan area has the following advantages: long distance transmission, better security, Multiple Service Transmission Platform (MSTP) being supported, less investment etc., and with the protection function of the SDH equipment, the transmission is reliable.

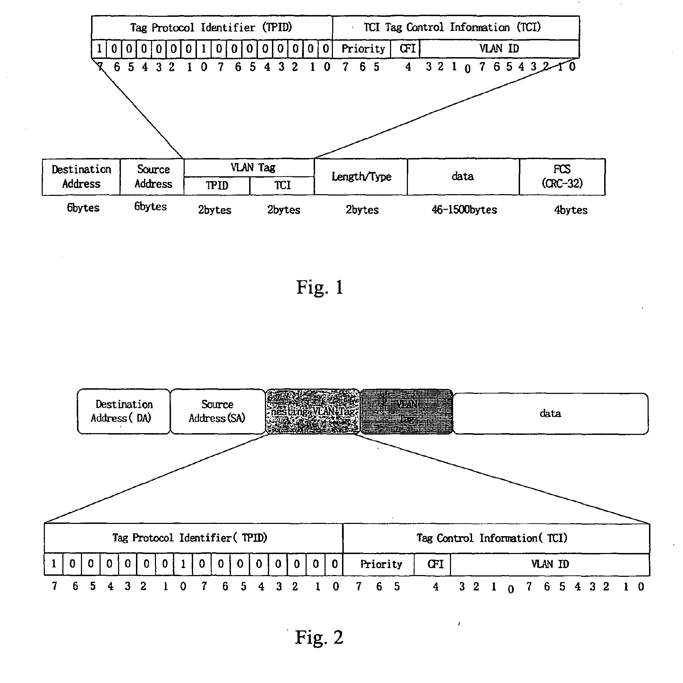

At present, the metropolitan network is based on the IEEE 802.3 Ethernet standard and IEEE 802.1Q Virtual Local Area Network (VLAN) standard. Figure 1 shows the IEEE802.1Q Ethernet frame structure, which has an original VLAN Tag field with four bytes between the source address and length/type fields of the normal MAC frame. In other words, an 802.1Q Ethernet frame is consisted of a Destination Address field with six bytes, a Source Address field with six bytes, an original VLAN Tag field with four bytes, a Length/Type field with two bytes, a Data field with 46 to 1500 bytes and a Frame Check Sequence (FCS) field with four bytes. Wherein the original VLAN Tag is consisted of a Tag Protocol Identifier (TPID) sub-field with two bytes and a Tag Control Information (TCI) sub-field with two bytes. The TPID is a fixed value 0x8100, while the TCI is consisted of a User Priority with three bits, a VLAN Identifier (VID) with 12 bits and a Canonical Format Indicator (CFI) with one bit. With the above frame structure, transmission of various services, such as data, voice and video, is implemented.

Nevertheless, since the original VLAN ID field in the IEEE 802.1Q Ethernet frame has only 12 bits length, it can only support 4096 VLANs. When a large amount of users converge to the MAN, different users own the same VLAN ID, i.e. the VLAN ID is used repeatedly since there are 4096 VLANs in the MAN at most. In this case, the problems arise as follows:
a) In a MAN, the bandwidth of VC_TRUNK mainly has the rate levels VC-12, VC-3 and VC-4 that correspond to 2.048Mb/s, 45Mb/s and 155Mb/s, respectively. The bandwidth allocated to the users is mainly determined by the VC_TRUNK of SDH, i.e. in MAN equipment, a user owns the bandwidth for VC-12, VC-3 , VC-4 or an integer multiple of them. In this way, at any moment the bandwidth of any users is fixed and cannot be changed with different traffic because of the same VLAN ID. This will lead to a lower utilization coefficient of bandwidth.
b) When data of different users are transferred on the same VC_TRUNK, the data cannot be physically separated. The only way is to distinguish every user in the whole network element, so that every user owns different VLAN ID to logically separate its data. If a VLAN ID were used repeatedly, effective separation of different users data on the same VC_TRUNK would be impossible.
c) Usually, traffic needs to be grouped by their priority; higher priority traffic should be transferred first to provide a better Quality of Service (QoS). If a VLAN ID were used repeatedly, the different QoS for different user would not be implemented.
US2002/089992 discloses a method for segregate MAN traffic at a customer and a provider domain level using a VMAN protocol. A switch at the edge of the MAN encapsulates a customer data packet from an initiating 802.1Q customer domain in a new Ethernet header, which is used to specify the 802.1Q VLAN tags as determined by the customer-related VLAN configurations. A switch at the core of the MAN encapsulates the data packet further in another new Ethernet header, which is used to specify new VMAN tags as determined by the MAN service provider VMAN configurations. The remote switch strips the VLAN tags from the data packet, and forwards the stripped data packet to the receiving 802.1Q customer domain as specified in the 802.1Q VLAN tag. However, the solution of US2002/089992 is complicated and is used in the VMAN.

### Summary of the Invention

The invention provides a data transmission method for different users on the same VC_TRUNK of a MAN to solve the repeated VLAN ID mentioned above and to provide different QoS levels and bandwidths for different users.

The technical scheme of the invention is as the follows.

A data transmission method comprising the following steps being performed by an equipment, hereinafter the MAN equipment, of a Metropolitan Area Network, hereinafter referred to as the MAN, said method being adapted to accommodate for different users on the same Virtual Container TRUNK, hereinafter referred to as the VC_TRUNK, of the MAN:
presetting an attribute in a table of VC_TRUNK attributes that shows whether the VC_TRUNK supports a nest mode, and if the VC_TRUNK supports the nest mode, performing the following steps:
   on uplink from a port of the MAN equipment to a VC_TRUNK, producing an Ethernet frame, hereinafter referred to as the nesting Ethernet frame, by inserting into an original Ethernet frame a nesting Virtual Local Area Network Tag field, hereinafter referred to as the nesting VLAN Tag field, for distinguishing Ethernet frames coming from different users on the same VC_TRUNK and having identical virtual local area network identifiers, hereinafter referred to as VLAN IDs, and then forwarding the nesting Ethernet frame with the inserted nesting VLAN Tag field to the said VC_TRUNK; and
   on downlink from the VC_TRUNK to the port of the MAN equipment, obtaining an original Ethernet frame by removing the inserted nesting VLAN Tag field from a received frame, and then sending the original Ethernet frame to the port of the MAN equipment such as FE port (100Mbit/s) or GE port (1000Mbit/s).

Wherein, on uplink from the port of the MAN equipment to the VC_TRUNK, before the step of inserting the nesting VLAN Tag field into the original Ethernet frame, the method further comprises: sending the original Ethernet frame and nesting VLAN Tag information to the VC_TRUNK, detecting whether the VC_TRUNK supports the nest mode; if the VC_TRUNK supports the nest mode, performing the step of inserting the nesting VLAN Tag field into the original Ethernet frame according to the nesting VLAN Tag information, otherwise no insertion is performed; and
on downlink, before the step of removing the inserted nesting VLAN Tag field, the method further comprises, detecting whether said VC_TRUNK supports the nest mode; if the VC_TRUNK supports the nest mode, further detecting whether the received frame has a nesting VLAN Tag field, and if the received frame has a nesting VLAND Tag field, performing the step of removing the said inserted nesting VLAN Tag field, otherwise discarding the received frame; if the said VC_TRUNK does not support the nest mode, no removing operation is performed.

Wherein the said nesting VLAN Tag field is inserted between the source address and the original VLAN Tag fields of IEEE 802.1Q frame and that has the same format of the VLAN Tag field in the IEEE 802.1Q Ethernet frame.

The number of the inserted nesting VLAN Tag field is either one or more than one.

The invention overcomes the disadvantages what appears when the IEEE 802.1Q is applied in a MAN through an inserted nesting VLAN Tag field in the IEEE 802.1Q Ethernet frame. The inserted nesting VLAN Tag field has the same format as the VLAN Tag field in the IEEE 802.1Q frame. With this frame structure, the VLAN ID of the inserted nesting VLAN Tag field is used to differentiate different users in the same VC_TRUNK and to mask private VLAN ID, so different users may have the same private VLAN ID. With this method, multiple users may hire the same VC_TRUNK for their data transmission, and different bandwidth may be allocated to different user, and also different QoS requirement can be satisfied.

### Brief Description of the Drawings

Figure 1 shows the Ethernet frame structure of IEEE802.1Q standard.
Figure 2 shows the Ethernet frame structure with a nesting VLAN Tag field.
Figure 3 shows a flowchart diagram that forms an inserted nesting VLAN Tag field at uplink from a MAN equipment port to a VC_TRUNK.
Figure 4 shows a flowchart diagram that MAN equipment processes an Ethernet frame with an inserted nesting VLAN Tag field at downlink from a VC_TRUNK to the MAN equipment port.

### Embodiments of the Invention

The invention will be described in more detail with reference to the drawings.

The invention proposes a transmission method that inserts a nesting VLAN Tag field positioned before the original VLAN Tag field of an IEEE 802.1Q frame and then sends out. Wherein the inserted nesting VLAN Tag has the same structure as the original VLAN Tag in an IEEE 802.1Q frame.

In figure 2, the field with a pattern of squares is the original VLAN Tag of the IEEE 802.1Q frame, and its VLAN ID is a user private VLAN ID for the traffic transmission on a VC_TRUNK. In figure 2, the field with a pattern of oblique lines is the nesting VLAN Tag field, which has the same format as the original VLAN Tag of the IEEE 802.1Q: a TPID with two bytes and a TCI with two bytes too; the TPID field is a fixed value of 0x8100, and the TCI field is consisted of a User-priority with three bits, a CIF with one bit and a VLAN ID with 12 bits. Wherein the nesting VLAN ID is common for those users on the same VC_TRUNK. In this way, the VLAN ID in the nesting VLAN Tag is used to distinguish different users that make data transmission on the same VC_TRUNK and the private VLAN ID in the frame is masked. Therefore, different users with the same private VLAN ID are allowed, so that the Virtual Private Network (VPN) service can be implemented in the MAN transmission equipment, various bandwidths can be allocated to different users on the same VC_TRUNK, and traffic can have different priority based on the VLAN ID in the nesting VLAN Tag, and the number of VLAN ID is expanded to 4096 X 4096.

The nesting VLAN Tag format need not be same as that of the IEEE 802.1Q frame and need not be inserted before the VLAN Tag field of the IEEE 802.1Q, and there can be more than one nesting VLAN Tag as long as the MAN equipment can recognize them. Anyway, in the invention the nesting VLAN Tag format which is identical with that of IEEE 802.1Q frame is still applied in order to be recognized and processed by the software easily.

The processing procedure of the inserted nesting VLAN Tag in MAN transmission equipment is described as the following.

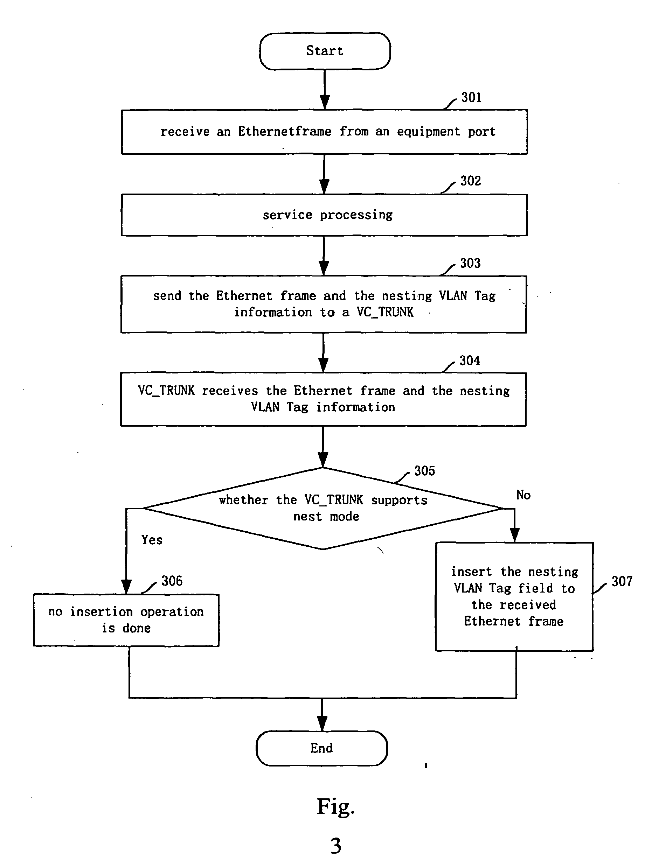

Figure 3 shows a flowchart diagram that forms an inserted nesting VLAN Tag field in a frame at uplink from a MAN equipment port to a VC_TRUNK. The processing procedure comprises,
Step 301, receiving an Ethernet frame from a port by MAN transmission equipment;
Step 302, performing service processing, such as address analysis, data exchange between two layers etc.;
Step 303, sending the Ethernet frame and the nesting VLAN Tag information to the VC_TRUNK;
Step 304, receiving the Ethernet frame and the nesting VLAN Tag information by the VC_TRUNK;
Step 305, detecting whether the VC_TRUNK supports nest mode, if it is, go to Step 307 that inserts the nesting VLAN Tag field in the Ethernet frame, and then go to Step 308; otherwise go to Step 306 that does not insert the nesting VLAN Tag field in the Ethernet frame;
Step 308, forwarding the Ethernet frame with the inserted nesting VLAN Tag field to the VC_TRUNK of SDH.

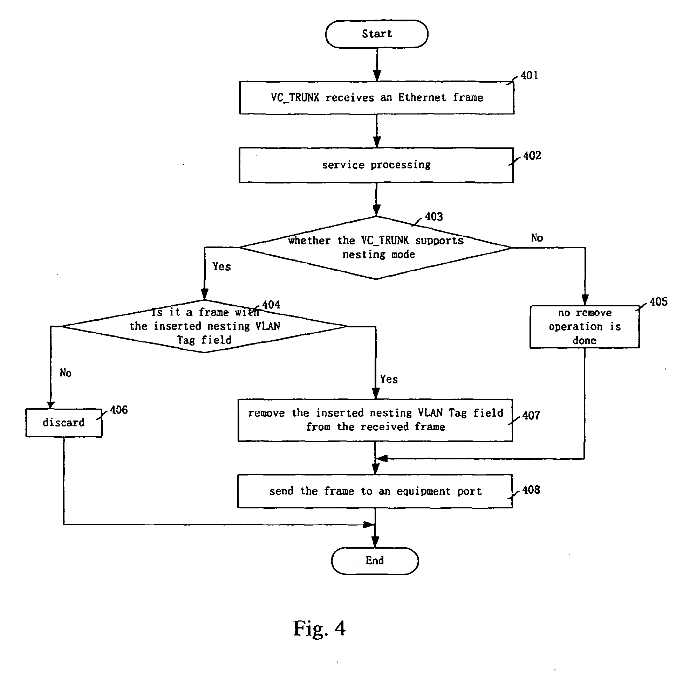

Figure 4 shows a flowchart diagram that processes an Ethernet frame with the inserted nesting VLAN Tag field at downlink from a VC_TRUNK to a MAN equipment port. The processing procedure comprises,
Step 401, receiving an Ethernet frame with an inserted nesting VLAN Tag field from the VC_TRUNK by the MAN equipment;
Step 402, performing service processing;
Step 403, detecting whether the VC_TRUNK supports nest mode; if it is, go to Step 404 to detect whether the frame is inserted with a nesting VLAN Tag field; if it is, go to Step 407 to remove the nesting VLAN Tag field and recover the received frame to IEEE 802.1Q frame format that can be recognized by the user equipment, and then go to Step 408; if the received frame is not inserted with a nesting VLAN Tag field, go to Step 406 to discard the received frame; if the VC_TRUNK does not support nest mode, go to Step 405, which does not remove the nesting VLAN Tag, and then go to Step 408 directly.
Step 408, sending to the equipment port directly.

The step of inserting VLAN Tag is performed on the VC_TRUNK, i.e. frames with the inverted nesting VLAN Tag field are transmitted only inside the MAN. When equipments at user side do not identify the frame with the inserted nesting VLAN Tag field, the inserted nesting VLAN Tag field is removed, and before being sent to the user equipment, the frame with the inserted nesting VLAN Tag field are recovered to the IEEE 802.1Q frame format which the user equipment can identify. Of course, if the user equipment can identify the frame with the inserted nesting VLAN Tag field, the inserted nesting VLAN Tag need not be removed. In general, the frame with the inserted nesting VLAN Tag field is only effective in the transmission equipment of a MAN in order to separate different users, different services and to satisfy the different QoS requirement; it is unnecessary to sent the inserted nesting VLAN Tag field to user equipment.

A VC_TRUNK attribute of nest mode or vice versa can be preset in the VC_TRUNK attribute table. When the VC_TRUNK does not support nest mode, the insertion or remove of the nesting VLAN Tag field can be done in the next lower layer equipment which supports nest mode to be compatible with the developing MAN transmission equipment.

## Claims

1. A data transmission method comprising the following steps being performed by an equipment, hereinafter the MAN equipment, of a Metropolitan Area Network, hereinafter referred to as the MAN, said method being adapted to accommodate for different users on a same Virtual Container TRUNK, hereinafter referred to as the VC_TRUNK, of the MAN:
- presetting an attribute in a table of VC_TRUNK attributes that shows whether the VC_TRUNK supports a nest mode, and
- if the VC_TRUNK supports the nest mode, performing the following steps:
- on uplink from a port of the MAN equipment to a VC_TRUNK,
- producing an Ethernet frame, hereinafter referred to as the nesting Ethernet frame, by inserting (307) into an original Ethernet frame a nesting Virtual Local Area Network Tag field, hereinafter referred to as the nesting VLAN Tag field, for distinguishing Ethernet frames coming from different users on the same VC_TRUNK and having identical virtual local area network identifiers, hereinafter referred to as VLAN IDs, and then
- forwarding (308) the nesting Ethernet frame with the inserted nesting VLAN Tag field to the said VC_TRUNK; and
- on downlink from the VC_TRUNK to the port of the MAN equipment,
- obtaining an original Ethernet frame by removing (407) the inserted nesting VLAN Tag field from a received frame, and then
- sending (408) the original Ethernet frame to the port of the MAN equipment.

2. The data transmission method according to claim 1, said method further comprising:
- on uplink from the port of the MAN equipment to the VC_TRUNK, before the step of inserting (307) the nesting VLAN Tag field into the original Ethernet frame,
- sending (303) the original Ethernet frame and nesting VLAN Tag information to the VC_TRUNK,
- detecting (305) whether the VC_TRUNK supports the nest mode,
- if the VC_TRUNK supports the nest mode
- performing the step of inserting (307) the nesting VLAN Tag field into the original Ethernet frame according to the nesting VLAN Tag information,
- otherwise no insertion is performed (306); and
- on downlink, before the step of removing (407) the inserted nesting VLAN Tag field,
- detecting (403) whether said VC_TRUNK supports the nest mode;
- if the VC_TRUNK supports the nest mode:
- detecting (404) whether the received frame has a nesting VLAN Tag field, and
- if the received frame has a nesting VLAN Tag field,
- performing the step of removing (407) the said inserted nesting VLAN Tag field,
- otherwise discarding (406) the received frame;
- if the said VC_TRUNK does not support the nest mode, no removing (405) operation is performed.

3. The data transmission method according to claim 1 or 2, wherein:
- the nesting VLAN Tag field is inserted between the source address and the VLAN Tag fields of original Ethernet frame, and
- the nesting VLAN Tag field has the same format as the VLAN Tag field in the original Ethernet frame.

4. The data transmission method according to claim 1 or 2, wherein the number of the inserted nesting VLAN Tag field is one.

5. The data transmission method according to claim 1 or 2, wherein the number of the inserted nesting VLAN Tag field is more than one.

## Patentansprüche

1. Datenübertragungsverfahren, umfassend die folgenden Schritte, die durch ein Gerät, hierin nachfolgend das MAN-Gerät, eines Metropolitan Area Network, hierin nachfolgend als MAN bezeichnet, durchgeführt werden, wobei das Verfahren geeignet ist, um verschiedene Benutzer an einem gleichen TRUNK eines virtuellen Containers, hierin nachfolgend als VC_TRUNK bezeichnet, des MAN unterzubringen:
- Voreinstellen eines Attributs in einer Tabelle von VC_TRUNK-Attributen, das zeigt, ob das VC_TRUNK einen Einschachtelungsmodus unterstützt, und
- wenn das VC_TRUNK den Einschachtelungsmodus unterstützt, Durchführen der folgenden Schritte:
- bei einem Uplink von einem Port des MAN-Geräts zu einem VC_TRUNK,
- Erzeugen eines Ethernet-Frames, hierin nachfolgend als Einschachtelungs-Ethernet-Frame bezeichnet, durch Einsetzen (307) eines Einschachtelungs-Tag-Felds eines virtuellen lokalen Netzes, hierin nachfolgend als Einschachtelungs-VLAN-Tag-Feld bezeichnet, in einen ursprünglichen Ethernet-Frame zum Unterscheiden von Ethernet-Frames, die von verschiedenen Benutzern an dem selben VC_TRUNK stammen und identische Identifikatoren eines virtuellen lokalen Netzes, hierin nachfolgend als VLAN-IDs bezeichnet, aufweisen, und dann
- Weiterleiten (308) des Einschachtelungs-Ethernet-Frames mit dem eingesetzten Einschachtelungs-VLAN-Tag-Feld zu dem VC_TRUNK; und
- bei einem Downlink von dem VC_TRUNK zu dem Port des MAN-Geräts,
- Erhalten eines ursprünglichen Ethernet-Frames durch Entfernen (407) des eingesetzten Einschachtelungs-VLAN-Tag-Felds von einem empfangenen Frame, und dann
- Senden (408) des ursprünglichen Ethernet-Frames an den Port des MAN-Geräts.

2. Datenübertragungsverfahren nach Anspruch 1, wobei das Verfahren ferner umfasst:
- bei einem Uplink von dem Port des MAN-Geräts zu dem VC_TRUNK, vor dem Schritt des Einsetzens (307) des Einschachtelungs-VLAN-Tag-Felds in den ursprünglichen Ethernet-Frame,
- Senden (303) des ursprünglichen Ethernet-Frames und der Einschachtelungs-VLAN-Tag-Information an das VC_TRUNK,
- Detektieren (305), ob das VC_TRUNK den Einschachtelungsmodus unterstützt,
- wenn das VC_TRUNK den Einschachtelungsmodus unterstützt,
- Durchführen des Schritts des Einsetzens (307) des Einschachtelungs-VLAN-Tag-Felds in den ursprünglichen Ethernet-Frame gemäß der Einschachtelungs-VLAN-Tag-Information,
- andernfalls wird kein Einsetzen durchgeführt (306); und
- bei einem Downlink, vor dem Schritt des Entfernens (407) des eingesetzten Einschachtelungs-VLAN-Tag-Felds,
- Detektieren (403), ob das VC_TRUNK den Einschachtelungsmodus unterstützt;
- wenn das VC_TRUNK den Einschachtelungsmodus unterstützt:
- Detektieren (404), ob der empfangene Frame ein Einschachtelungs-VLAN-Tag-Feld aufweist, und
- wenn der empfangene Frame ein Einschachtelungs-VLAN-Tag-Feld aufweist,
- Durchführen des Schritts des Entfernens (407) des eingesetzten Einschachtelungs-VLAN-Tag-Felds,
- andernfalls Verwerfen (406) des empfangenen Frames;
- wenn das VC_TRUNK den Einschachtelungsmodus nicht unterstützt, wird keine Entfernungsoperation
durchgeführt (405).

3. Datenübertragungsverfahren nach Anspruch 1 oder 2, wobei
- das Einschachtelungs-VLAN-Tag-Feld zwischen der Quellenadresse und den VLAN-Tag-Feldern des ursprünglichen Ethernet-Frames eingesetzt wird, und
- das Einschachtelungs-VLAN-Tag-Feld das selbe Format aufweist wie das VLAN-Tag-Feld in dem ursprünglichen Ethernet-Frame.

4. Datenübertragungsverfahren nach Anspruch 1 oder 2, wobei die Anzahl des eingesetzten Einschachtelungs-VLAN-Tag-Felds Eins ist.

5. Datenübertragungsverfahren nach Anspruch 1 oder 2, wobei die Anzahl des eingesetzten Einschachtelungs-VLAN-Tag-Felds größer als Eins ist.

## Revendications

1. Procédé de transmission de données comprenant les étapes suivantes, effectuées par un équipement, désigné ci-après équipement MAN, d'un Réseau Métropolitain, désigné ci-après réseau MAN (pour Metropolitan Area Network), ledit procédé étant conçu pour prendre en charge différents utilisateurs sur une Jonction d'Encapsulation Virtuelle, désignée ci-après jonction VC_TRUNK (pour Virtual Container TRUNK), du réseau MAN :
- la prédéfinition d'un attribut dans une table d'attributs VC_TRUNK qui indique si la jonction VC_TRUNK prend en charge un mode imbriqué, et
- si la jonction VC_TRUNK prend en charge le mode imbriqué, l'exécution des étapes suivantes :
- sur la liaison montante depuis un port de l'équipement MAN vers une jonction VC_TRUNK,
- la production d'une trame Ethernet, désignée ci-après trame Ethernet d'imbrication, en insérant (307) dans une trame Ethernet originale un champ de Marqueur de Réseau Local Virtuel d'imbrication, désigné ci-après champ de Marqueur VLAN d'imbrication, pour distinguer des trames Ethernet provenant de différents utilisateurs sur la même jonction VC_TRUNK et ayant des identificateurs de réseau local virtuel identiques, désignés ci-après identificateurs VLAN ID, puis
- la réexpédition (308) de la trame Ethernet d'imbrication avec le champ de Marqueur VLAN d'imbrication inséré à ladite jonction VC_TRUNK ; et
- sur la liaison descendante de la jonction VC_TRUNK vers le port de l'équipement MAN,
- l'obtention d'une trame Ethernet originale en éliminant de la trame reçue (407) le champ de Marqueur VLAN d'imbrication inséré, puis
- l'envoi (408) de la trame Ethernet originale vers le port de l'équipement MAN.

2. Procédé de transmission de données selon la revendication 1, ledit procédé comprenant en outre :
- sur la liaison montante du port de l'équipement MAN vers la jonction VC_TRUNK, avant l'étape d'insertion (307) du champ de Marqueur VLAN d'imbrication dans la trame Ethernet originale,
- l'envoi (303) de la trame Ethernet originale et de l'information de Marqueur VLAN d'imbrication à la jonction VC_TRUNK,
- la détection (305) du fait que la jonction VC_TRUNK prend ou non en charge le mode d'imbrication,
- si la jonction VC_TRUNK prend en charge le mode d'imbrication
- l'exécution de l'étape d'insertion (307) du champ de Marqueur VLAN d'imbrication dans la trame Ethernet originale en conformité avec l'information de Marqueur VLAN d'imbrication,
- sinon, l'absence d'exécution de l'insertion (306) ; et
- sur la liaison descendante, avant l'étape d'élimination (407) du champ de Marqueur VLAN d'imbrication inséré,
- la détection (403) du fait que ladite jonction VC_TRUNK prend ou non en charge le mode d'imbrication ;
- si la jonction VC_TRUNK prend en charge le mode d'imbrication :
- la détection (404) du fait que la trame reçue comporte ou non un champ de Marqueur VLAN d'imbrication, et
- si la trame reçue comporte un champ de Marqueur VLAN d'imbrication,
- l'exécution de l'étape d'élimination (407) dudit champ de Marqueur VLAN d'imbrication inséré,
- et sinon le rejet (406) de la trame reçue ;
- si ladite jonction VC_TRUNK ne prend pas en charge le mode d'imbrication, l'absence d'exécution de l'opération (405) d'élimination.

3. Procédé de transmission de données selon la revendication 1 ou 2, dans lequel :
- le champ de Marqueur VLAN d'imbrication est inséré entre l'adresse de source et les champs de Marqueur VLAN de la trame Ethernet originale, et
- le champ de Marqueur VLAN d'imbrication a le même format que le champ de Marqueur VLAN contenu dans la trame Ethernet originale.

4. Procédé de transmission de données selon la revendication 1 ou 2, dans lequel le nombre de champs de Marqueur VLAN d'imbrication insérés est égal à un.

5. Procédé de transmission de données selon la revendication 1 ou 2, dans lequel le nombre de champs de Marqueur VLAN d'imbrication insérés est supérieur à un.
